# EUROPEAN PATENT APPLICATION

(11) **EP 4 253 806 A1**
(43) Date of publication of application: **04.10.2023**
(21) Application number: 23158202.4
(22) Date of filing: 23.02.2023
(51) Int. Cl.: F16J 15/34, F16J 15/3224, F16J 15/3256, F16J 15/54, F16J 15/3232, F16J 15/3252

(54) **CARTRIDGE SEAL ASSEMBLY**

(30) Priority: 24.02.2022 US 202263313318 P
(71) Applicant: Roller Bearing Company of America, Inc., Oxford, CT 06478 (US)
(72) Inventor: REINHARDT, John, LOUISVILLE (US); BREES, Samantha, MARANA (US); LOPEZ, Riley, TUCSON (US)
(74) Representative: Ström & Gulliksson AB

(57) **Abstract**

A cartridge seal assembly 1 includes an outer housing 10 including a first tubular segment 12 having a first axial end 122 and a second axial end 124, and a first flange 14 extending radially inward from the second axial end 124; an inner housing 20 including a second tubular segment 22 having a third axial end 222 and a fourth axial end 224, and a second flange 24 extending radially inward from the fourth axial end 224; and a first seal ring 30 having a first tapered inner circumferential surface 38 that defines a first passage 31 therethrough. The inner housing 20 is removably secured to the outer housing 10, and the first seal ring 30 engages a portion of one of the inner housing 20 and the outer housing 10.

## Description

### CROSS REFERENCE TO RELATED APPLICATION

This application claims the benefit of prior-filed, co-pending U.S. Provisional Patent Application No. 63/313,318, filed on February 24, 2022, the entire contents of which is incorporated herein by reference in its entirety.

### FIELD OF THE INVENTION

The present invention is directed to a cartridge seal assembly, and in particular, to a taper bore cartridge seal assembly for an aircraft microturbine vapor cycle refrigeration unit.

### BACKGROUND

Vapor compressor refrigeration devices are used to cool heat-generating electronic components, batteries, cockpits, and cabins of aircraft, such as urban air mobility aircraft. Turbomachinery used in vapor cycle refrigeration applications come in a wide range of sizes. Larger units often have the space to accommodate traditional mechanical face seals in which a rotating annular disk seals against a stationary surface. However, a relatively large amount of space is needed to fit such an arrangement. A microturbine, on the other hand, has limited space available for seals, rendering traditional mechanical face seals impractical.

Furthermore, traditional mechanical face seals rely on contact between sealing surfaces (for example, the seal and the impeller) to prevent leakage. To achieve this, traditional mechanical face seals typically include components such as springs, designed to exert a biasing force, which urges the sealing surface into contact with the impeller. These components add cost and take up space. Additionally, this contact between sealing surfaces and the impeller negatively impacts the service life of traditional mechanical face seals. This reduction in service life is exacerbated if the seal cannot follow the eccentricity in the rotation of the impeller, which spins at a high velocity.

Conventional seal assemblies for microturbines utilize segmented seals. Another shortcoming of the conventional seal assemblies is that it is not easy to replace the sealing elements; replacing the sealing elements involves removing the entire capsule from the turbine.

Thus, there is a need for an improved seal assembly for microturbines that addresses the foregoing problems.

### SUMMARY

According to aspects illustrated herein, there is provided a cartridge seal assembly for a shaft. The cartridge seal assembly includes an outer housing including a first tubular segment having a first axial end and a second axial end, and a first flange extending radially inward from the second axial end; an inner housing including a second tubular segment having a third axial end and a fourth axial end, and a second flange extending radially inward from the fourth axial end, the inner housing being removably secured to the outer housing; and a first seal ring having a first tapered inner circumferential surface that defines a first passage therethrough, the first seal ring engaging a portion of one of the inner housing and the outer housing.

In some embodiments, the shaft is configured to rotate in the first passage. In some embodiments, the first seal ring is configured to become coaxial with the shaft, in response to gas flowing across the first tapered inner circumferential surface. In some embodiments, the cartridge seal assembly further includes a second seal ring having a second tapered circumferential surface, the second seal ring engaging the inner housing. In some embodiments, the first seal ring further includes a first anti-rotation feature, the inner housing further includes a second anti-rotation feature, and the second anti-rotation feature engages the first anti-rotation feature to prevent rotation of the first seal ring with respect to the inner housing.

In some embodiments, the first anti-rotation feature includes a first tangential notch and the second anti-rotation feature includes a tangential protuberance. In some embodiments, the second seal ring further includes a third anti-rotation feature, and the second anti-rotation feature engages the third anti-rotation feature to prevent rotation of the second seal ring with respect to the inner housing. In some embodiments, the third anti-rotation feature includes a second tangential notch.

In some embodiments, the first tubular segment has a first inner circumferential surface and a first outer circumferential surface, the first flange includes a second inner circumferential surface, first threads are formed on the first inner circumferential surface and extend axially from the first axial end, the second tubular segment has a third inner circumferential surface and a second outer circumferential surface, the second flange includes a fourth inner circumferential surface, second threads are formed on the second outer circumferential surface and extend axially from the fourth axial end, and the first threads engage the second threads to removably secure the inner housing to the outer housing. In some embodiments, the first tubular segment includes a first axial face proximate the first axial end, the first flange includes a first outer axial face and a first inner axial face, the second tubular segment includes a second axial face proximate the third axial end, the second axial face abuts the first inner axial face, the second flange includes a second inner axial face and a second outer axial face, and the first seal ring is disposed between the first inner axial face and the second inner axial face.

In some embodiments, the first seal ring further includes a third axial face, a fourth axial face, and a third outer circumferential surface, the first tapered inner circumferential surface extends from the third axial face to the fourth axial face, and an inner diameter of the first seal ring defined by the first tapered inner circumferential surface reduces moving from the fourth axial face to the third axial face. In some embodiments, the second seal ring further includes a fifth axial face, a sixth axial face, and a fourth outer circumferential surface, the second tapered inner circumferential surface extends from the fifth axial face to the sixth axial face, and an inner diameter of the second seal ring defined by the second tapered inner circumferential surface reduces moving from the sixth axial face to the fifth axial face. In some embodiments, the fourth axial face abuts the fifth axial face.

In some embodiments, the first seal ring further includes a first annular groove formed between the third outer circumferential surface and the third axial face. In some embodiments, the second seal ring further includes a second annular groove formed between the fourth outer circumferential surface and the fifth axial face. In some embodiments, the outer housing is snap-fit onto the inner housing. In some embodiments, a taper angle of the first tapered inner circumferential surface with respect to a first axis of the first seal ring is about 1.8 degrees. In some embodiments, the taper angle is within a range of 0.5 to 10 degrees. In some embodiments, the first tubular segment is press fit into a pocket of a turbine casing. In some embodiments, the first seal ring is configured such that there is a first gap between a first inner-most edge of the first seal ring and the shaft, in response to a gas pressure differential across the first passage. In some embodiments, the second seal ring is configured such that there is a second gap between a second inner-most edge of the second seal ring and the shaft, in response to a gas pressure differential across a second passage through the second seal ring. In some embodiments, the shaft is configured to rotate inside the second passage through the second seal ring and the first passage.

In some embodiments, the outer housing defines a first interior space. In some embodiments, the second flange extends into the interior area. In some embodiments, the first passage is a first free end passage disposed proximate to a first radially innermost portion along the first tapered inner circumferential surface of the first seal ring. In some embodiments, the first radially innermost portion of the first tapered inner circumferential surface extends radially inwardly from the outer housing and the inner housing 20. In some embodiments, the first passage is circumferentially coaxial (i.e., the gap remains constant) with a longitudinal axis of the shaft while the shaft is rotating and during displacement of the shaft parallel to the longitudinal axis.

In some embodiments, a third tangential notch is formed 180 degrees apart from the first tangential notch on the first seal ring. In some embodiments, a fourth tangential notch is formed 180 degrees apart from the second tangential notch on the second seal ring. In some embodiments, the cartridge seal assembly is installed in a casing of a microturbine, the outer housing is press fit into a pocket of the casing, the inner housing is located on a high pressure side of the casing, and the first seal and the second seal taper inwardly away from the high pressure side.

Any of the foregoing embodiments may be combined.

### BRIEF DESCRIPTION OF THE DRAWINGS

Referring now to the Figures, which are exemplary embodiments, and wherein the like elements are numbered alike:
FIG. 1A is a side cross sectional view of the cartridge seal assembly according to an embodiment;
FIG. 1B is an exploded view of the cartridge seal assembly according to the embodiment of FIG. 1A;
FIG. 2A is a side cross sectional view of the cartridge seal assembly according to another embodiment;
FIG. 2B is an exploded view of the cartridge seal assembly according to the embodiment of FIG. 2A;
FIG. 3A1 is a bottom view of the first seal ring according to the embodiment of FIG. 2A;

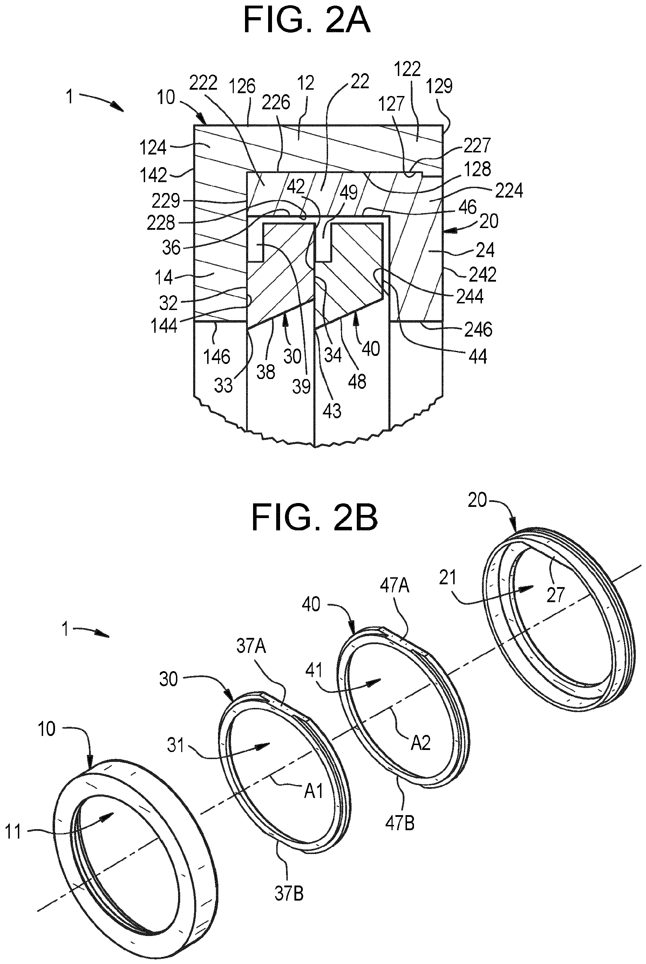

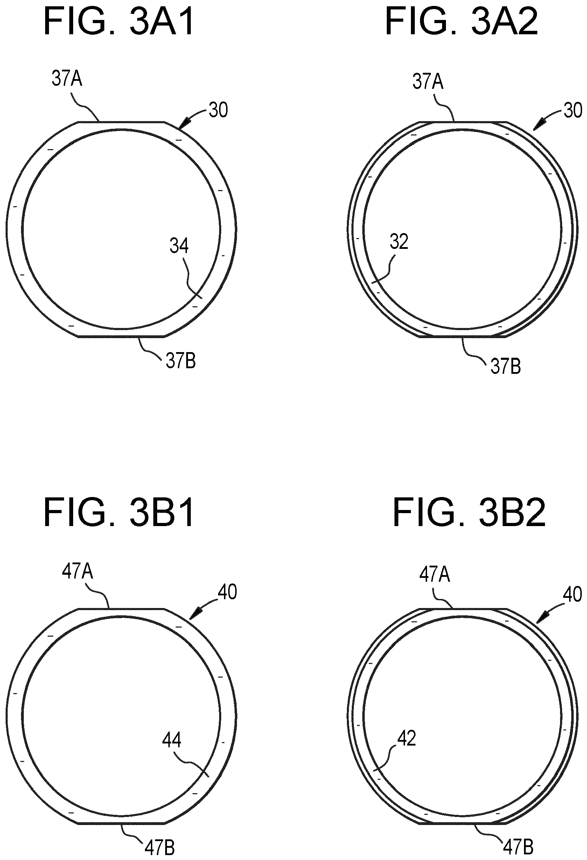

FIG. 3A2 is a top view of the first seal ring according to the embodiment of FIG. 2A;
FIG. 3B1 is a bottom view of the second seal ring according to the embodiment of FIG. 2A;
FIG. 3B2 is a top view of the second seal ring according to the embodiment of FIG. 2A;

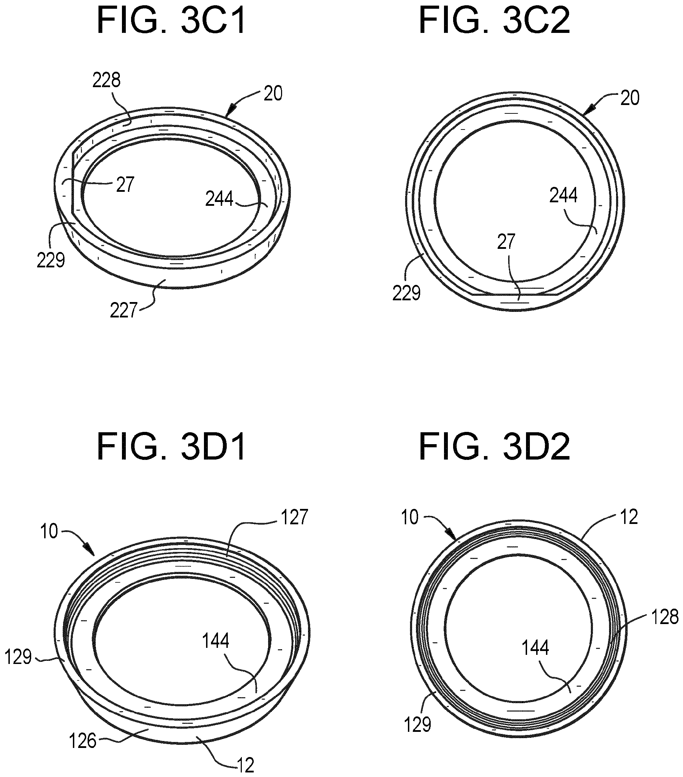

FIG. 3C1 is a perspective view of the inner housing according to the embodiment of FIG. 2A;
FIG. 3C2 is a top view of the inner housing according to the embodiment of FIG. 2A;
FIG. 3D1 is a perspective view of the outer housing according to the embodiment of FIG. 2A;
FIG. 3D2 is a bottom view of the outer housing according to the embodiment of FIG. 2A;

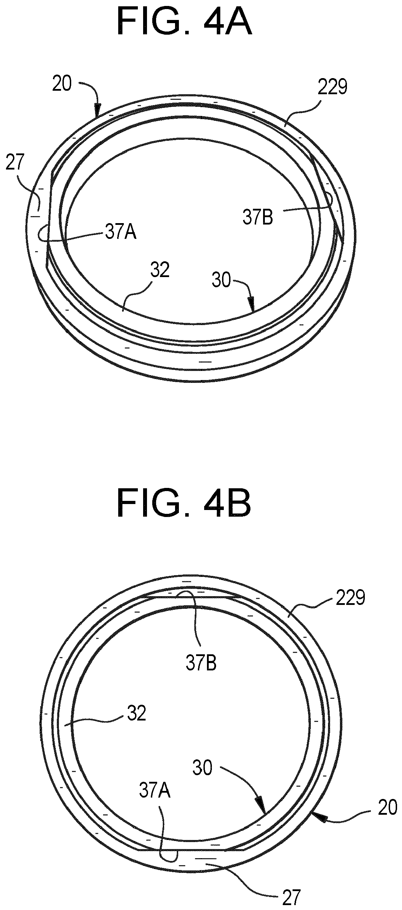

FIG. 4A is a perspective view of a partially assembled cartridge seal assembly according to the embodiment of FIG. 2A;
FIG. 4B is a top view of the partially assembled cartridge seal assembly according to the embodiment of FIG. 2A;

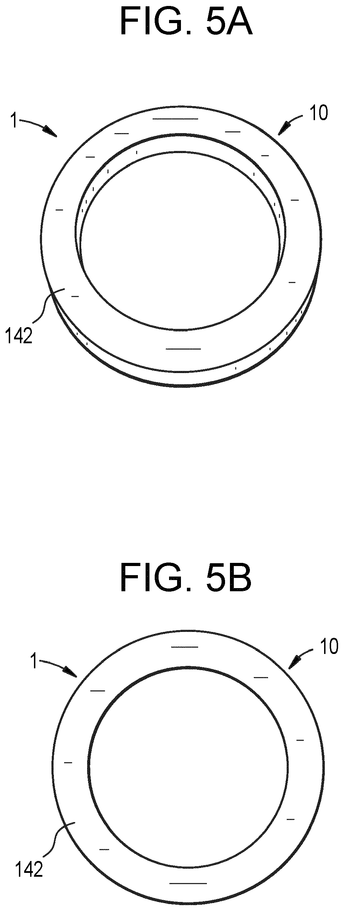

FIG. 5A is a perspective view of the cartridge seal assembly according to the embodiment of FIG. 2A;
FIG. 5B is a top view of the cartridge seal assembly according to the embodiment of FIG. 2A;

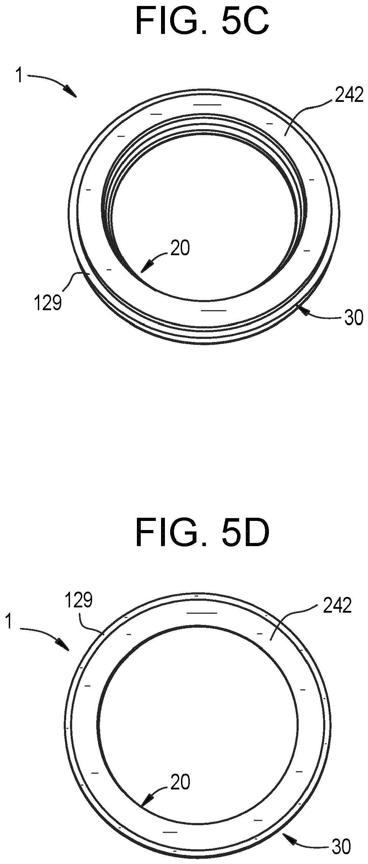

FIG. 5C is another perspective view of the cartridge seal assembly according to the embodiment of FIG. 2A;
FIG. 5D is a bottom view of the cartridge seal assembly according to the embodiment of FIG. 2A;

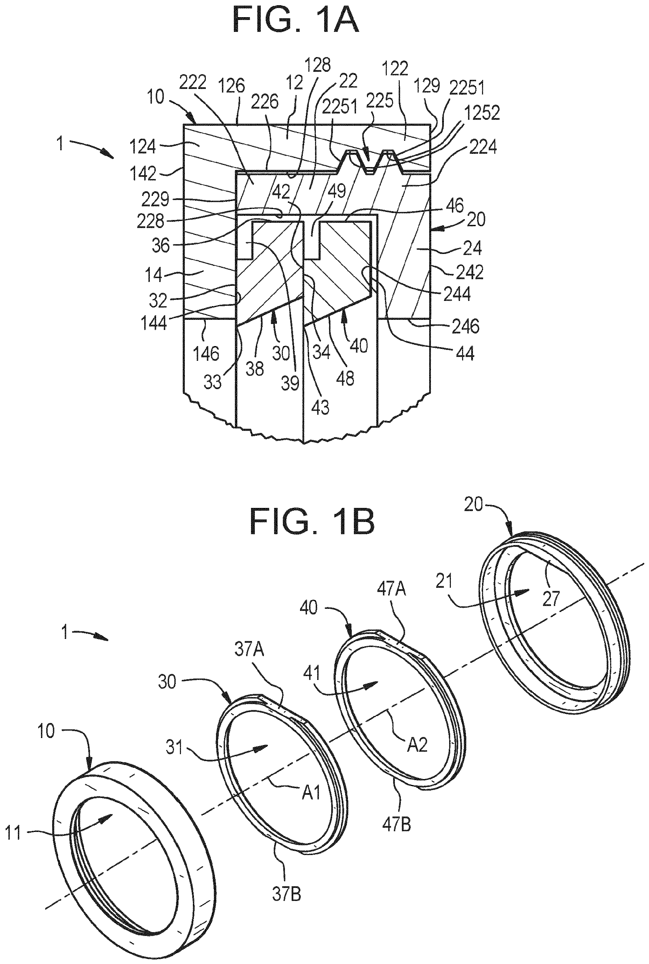

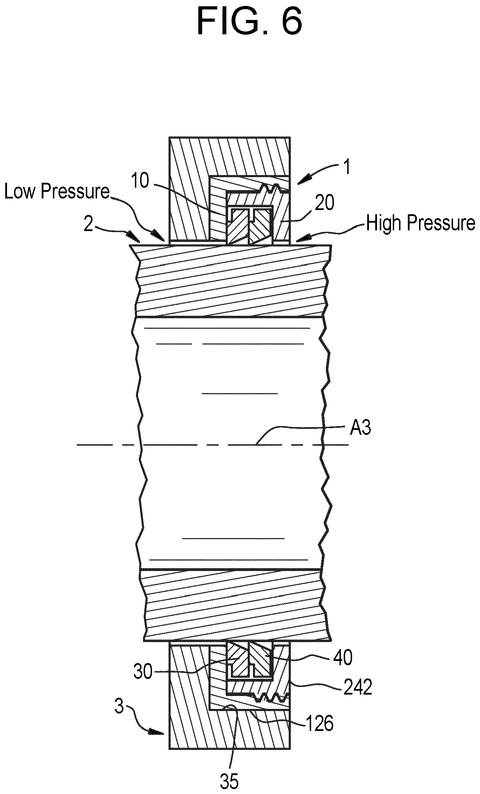

FIG. 6 is a side cross sectional view of the cartridge seal assembly according to the embodiment of FIG. 1A press fit in a turbine casing and with a shaft extending therethrough; and

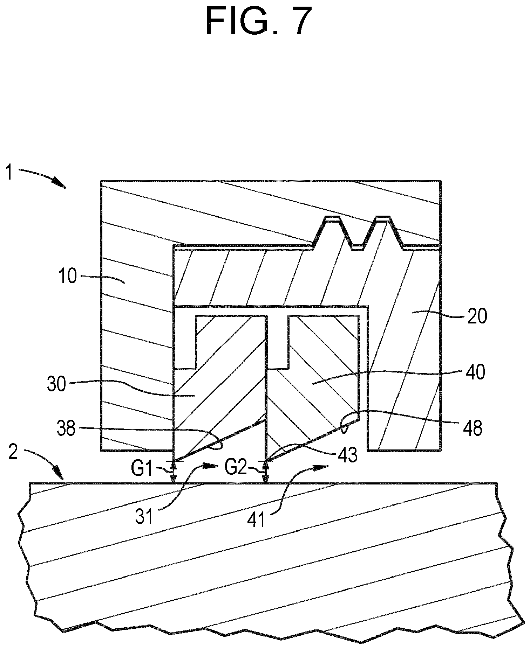

FIG. 7 is a side cross sectional view of the cartridge seal assembly according to the embodiment of FIG. 1A showing the gaps between the seal rings and the shaft in an exaggerated manner.

### DETAILED DESCRIPTION

Referring to FIGS. 1A, 1B, 2A, and 2B, a cartridge seal assembly 1 for a shaft 2 is provided. The cartridge seal assembly 1 includes an outer housing 10, an inner housing 20, a first seal ring 30, and a second seal ring 40. The outer housing 10 includes a first tubular segment 12 with a first interior space having a first axial end 122 and a second axial end 124, and a first flange 14 extending radially inward from the second axial end 124. The first tubular segment 12 includes a first axial face 129 proximate the first axial end 122, a first outer circumferential surface 126, and a first inner circumferential surface 128. The first flange 14 includes a first outer axial face 142, a first inner axial face 144, and a second inner circumferential surface 146.

In some embodiments, the outer housing 10 has an 'L' shaped cross section. In some embodiments, the first tubular segment 12 meets the first flange 14 at a right angle. In some embodiments, at least two of the first outer axial face 142, the first inner axial face 144, and the first axial face 129 are parallel. In some embodiments, at least two of the second inner circumferential surface 146, the first inner circumferential surface 128, and the first outer circumferential surface 126 are concentric. In some embodiments, the outer housing 10 is rigid. In some embodiments, the outer housing 10 is made of metal or a metallic alloy such as anodized aluminum. The second inner circumferential surface 146 defines a first aperture 11.

The inner housing 20 includes a second tubular segment 22 having a third axial end 222 and a fourth axial end 224, and a second flange 24 extending radially inward from the fourth axial end 224. The second tubular segment 22 includes a second axial face 229 proximate the third axial end 222, a second outer circumferential surface 226, and a third inner circumferential surface 228. The second flange 24 includes a second inner axial face 244, a second outer axial face 242, and a fourth inner circumferential surface 246. In some embodiments, the inner housing 20 is rigid. In some embodiments, the inner housing 20 is made of metal or a metallic alloy such as anodized aluminum.

In some embodiments, the inner housing 20 has an 'L' shaped cross section. In some embodiments, the second tubular segment 22 meets the second flange 24 at a right angle. In some embodiments, at least two of the second outer axial face 242, the second inner axial face 244, and the second axial face 229 are parallel. In some embodiments, at least two of the fourth inner circumferential surface 246, the third inner circumferential surface 228, and the second outer circumferential surface 226 are concentric. In some embodiments, the inner housing 20 is disposed at least partially inside the interior space of the outer housing 10. The second flange 24 may be disposed at least partially within the interior space. The fourth inner circumferential surface 246 defines a second aperture 21, which is aligned with the first aperture 11.

In some embodiments, the second axial face 229 abuts the first inner axial face 144. In some embodiments, the second outer circumferential surface 226 abuts the first inner circumferential surface 128. In some embodiments, the first axial face 129 is parallel with the second outer axial face 242. In some embodiments, the first axial face 129 is coplanar with the second outer axial face 242. In some embodiments, the second inner circumferential surface 146 is concentric with the fourth inner circumferential surface 246. In some embodiments, the first aperture 11 has a same diameter as the second aperture 21.

In the embodiment of FIGS. 2A-5D, the inner housing 20 is removably secured to the outer housing 10 by threads. First threads 127 are formed on the first inner circumferential surface 128 and extend axially from the first axial end 122. Second threads 227 are formed on the second outer circumferential surface 226 and extend axially from the fourth axial end 224. The first threads 127 engage the second threads 227 to removably secure the inner housing 20 to the outer housing 10. In some embodiments, a thread locking compound is applied to the threads 127, 227 to prevent in-service disassembly of the cartridge seal assembly 1.

In the embodiment of FIGS. 1A and 1B, the outer housing 10 is snap-fit onto the inner housing 20 by a snap-fit feature 225. The snap fit feature 225 includes ridges 2251 protruding from the second outer circumferential surface 226 of the inner housing 20 and grooves 1252 formed in the first inner circumferential surface 128 of the outer housing 10. However, any suitable snap-fit configuration is within the scope of the present disclosure. For example, in other embodiments, there are ridges protruding from the first inner circumferential surface 128 and grooves formed in the second outer circumferential surface 226.

Referring to FIGS. 1A, 1B, 2A, and 2B, the first seal ring 30 is annular and has a first tapered inner circumferential surface 38 that defines a first passage 31 therethrough. The first passage 31 may be a first free end passage. In some forms, the first passage may be disposed proximate to a first radially innermost portion of the first seal ring 30. In some embodiments, the outer housing 10 defines a first interior space. In some embodiments, the second flange 24 extends into the interior area. In some embodiments, the first passage 31 is a first free end passage disposed proximate to a first radially innermost edge 33 along the first tapered inner circumferential surface 38 of the first seal ring 30. In some embodiments, the first radially innermost edge 33 of the first tapered inner circumferential surface 38 extends radially inwardly from the outer housing 10 and the inner housing 20. In some embodiments, the first passage 31 is circumferentially coaxial (i.e., the gap G1 remains constant) with a longitudinal axis A3 of the shaft 2 while the shaft 2 is rotating and during displacement of the shaft parallel to the longitudinal axis A3.

In some embodiments, the second passage 41 is a first free end passage disposed proximate to a second radially innermost edge 43 along the second tapered inner circumferential surface 48 of the second seal ring 40. In some embodiments, the second radially innermost edge 43 of the second tapered inner circumferential surface 48 extends radially inwardly from the outer housing 10 and the inner housing 20. In some embodiments, the second passage 41 is circumferentially coaxial (i.e., the gap G2 remains constant) with a longitudinal axis A3 of the shaft 2 while the shaft 2 is rotating and during displacement of the shaft parallel to the longitudinal axis A3.

The first seal ring 30 engages a portion of one of the inner housing 20 and the outer housing 10. In a preferred embodiment, the first seal ring 30 engages the inner housing 20. The first seal ring 30 includes a third axial face 32, a fourth axial face 34, and a third outer circumferential surface 36. The first tapered inner circumferential surface 38 extends from the third axial face 32 to the fourth axial face 34. An inner diameter of the first seal ring 30 defined by the first tapered inner circumferential surface 38 reduces moving from the fourth axial face 34 to the third axial face 32. The first seal ring 30 is disposed between the first inner axial face 144 and the second inner axial face 244. In some embodiments, the first seal ring 30 is disposed at least partially inside the inner housing 20. In some embodiments, a radially inner most portion 33 of the first tapered inner circumferential surface 38 extends radially inwardly from the outer housing 10 and the inner housing 20. In some embodiments, at least two of the third axial face 32, the fourth axial face 34, and the first inner axial face 144 are parallel. In a preferred embodiment, there is a clearance between the third axial face 32 and the first inner axial face 144. In other embodiments, the third axial face 32 abuts the first inner axial face 144. In some embodiments, the third axial face 32 and/or the fourth axial face 34 are tilted at an angle relative to the first inner axial face 144 and the second inner axial face 244. In some embodiments, the third outer circumferential surface 36 abuts a portion of the third inner circumferential surface 228 (e.g., a lower portion) when turbine is at rest. The first passage 31 is aligned (e.g., radially aligned) with the first aperture 11 and the second aperture 21. In some embodiments, the third outer circumferential surface 36 is spaced apart from the third inner circumferential surface 228 to allow for radial movement of the first seal 30, for example during rotation of the shaft 2.

The first seal ring 30 further includes a first anti-rotation feature 37A, the inner housing 20 further includes a second anti-rotation feature 27, and the second anti-rotation feature 27 engages the first anti-rotation feature 37A to prevent rotation of the first seal ring 30 with respect to the inner housing 20. In some embodiments, the first seal ring 30 further includes a fourth anti-rotation feature 37B that engages the second anti-rotation feature 27 instead of the first anti-rotation feature 37A. In other words, in some embodiments, the first seal ring 30 is formed with a first anti-rotation feature 37A and a fourth anti-rotation feature 37B, either of which is capable of engaging the second anti-rotation feature 27 to prevent rotation of the first seal ring 30 with respect to the inner housing 20. This configuration is advantageous because it improves ease of assembly and balances the first seal ring 30. The first anti-rotation feature 37A includes a first tangential notch 37A and the second anti-rotation feature 27 includes a tangential protuberance 27. The first tangential notch 37A is formed in the third outer circumferential surface 36, and the tangential protuberance 27 protrudes from the third inner circumferential surface 228. In some embodiments, the fourth anti-rotation feature 37B is disposed on an opposite side of the first seal ring 30 from the first anti-rotation feature 37A. In some embodiments, the fourth anti-rotation feature 37B includes a third tangential notch 37B formed in the third outer circumferential surface 36. In some embodiments, the third tangential notch 37B is formed 180 degrees apart from the first tangential notch 37A on the first seal ring 30. The first seal ring 30 further includes a first annular groove 39 formed between the third outer circumferential surface 36 and the third axial face 32. In some embodiments, the first seal ring 30 is made of carbon graphite.

In some embodiments, a taper angle of the first tapered inner circumferential surface 38 with respect to a first axis A1 of the first seal ring 30 is about 1.8 degrees. In other embodiments, the taper angle is in the range of 1.7 to 1.9 degrees, 1.5 to 2.1 degrees, 1 to 4 degrees, or 0.5 to 10 degrees. Although in the embodiments of FIGS. 1A, 1B, 2A, and 2B the first tapered inner circumferential surface 38 is shown as a flat plane, in other embodiments, the first tapered inner circumferential surface 38 is concave, convex, or has an arcuate configuration. In an alternative embodiment, the orientation of the first seal ring 30 is reversed such that the fourth axial face 34 abuts the first inner axial face 144.

The cartridge seal assembly 1 further includes a second seal ring 40. In some embodiments, the second seal ring 40 has a similar or identical structure to the first seal ring 30. The second seal ring 40 is annular and has a second tapered inner circumferential surface 48 that defines a second passage 41 therethrough. The second seal ring 40 engages at least one of the inner housing 20 and the outer housing 10. In a preferred embodiment, the second seal ring 40 engages the inner housing 20. The second seal ring 40 further includes a fifth axial face 42, a sixth axial face 44, and a fourth outer circumferential surface 46. The second tapered inner circumferential surface 48 extends from the fifth axial face 42 to the sixth axial face 44. An inner diameter of the second seal ring 40 defined by the second tapered inner circumferential surface 48 reduces moving from the sixth axial face 44 to the fifth axial face 42. In some embodiments, the second tapered inner circumferential surface 48 is parallel with the first tapered inner circumferential surface 38. The second seal ring 40 is disposed between the first inner axial face 144 and the second inner axial face 244. In some embodiments, the second seal ring 40 is disposed at least partially inside the inner housing 20. In some embodiments, the fifth axial face 42, the sixth axial face 44, and the first inner axial face 144 are parallel. In some embodiments, the fourth outer circumferential surface 46 abuts the third inner circumferential surface 228 when the turbine is at rest. In some embodiments, the fourth outer circumferential surface 46 is spaced apart from the third inner circumferential surface 228 to allow for radial movement of the second seal 40, for example during rotation of the shaft 246. In some embodiments, the fourth axial face 34 abuts the fifth axial face 42. In a preferred embodiment, there is a clearance between the sixth axial face 44 and the second inner axial face 244. In other embodiments, the sixth axial face 44 abuts the second inner axial face 244. The second passage 41 is aligned with the first aperture 11, the second aperture 21, and the first passage 31.

The second seal ring 40 further includes a third anti-rotation feature 47A, and the second anti-rotation feature 27 engages the third anti-rotation feature 47A to prevent rotation of the second seal ring 40 with respect to the inner housing 20. In some embodiments, the second seal ring 40 further includes a fifth anti-rotation feature 47B that engages the second anti-rotation feature 27 instead of the third anti-rotation feature 47A. In other words, in some embodiments, the second seal ring 40 is formed with a third anti-rotation feature 47A and a fifth anti-rotation feature 47B, either of which is capable of engaging the second anti-rotation feature 27 to prevent rotation of the second seal ring 40 with respect to the inner housing 20. This configuration is advantageous because it improves ease of assembly and balances the second seal ring 40. The third anti-rotation feature 47A includes a second tangential notch 47A formed in the fourth outer circumferential surface 46. In some embodiments, the fifth anti-rotation feature 47B is disposed on an opposite side of the second seal ring 40 from the third anti-rotation feature 47A. In some embodiments, the fifth anti-rotation feature 47B includes a fourth tangential notch 47B formed in the fourth outer circumferential surface 46. In some embodiments, the fourth tangential notch 47B is formed 180 degrees apart from the second tangential notch 47A on the second seal ring 40. The second seal ring 40 further includes a second annular groove 49 formed between the fourth outer circumferential surface 46 and the fifth axial face 42. In some embodiments, the second seal ring 40 is made of carbon graphite.

In some embodiments, a taper angle of the second tapered inner circumferential surface 48 with respect to a second axis A2 of the second seal ring 40 is about 1.8 degrees. In other embodiments, the taper angle is in the range of 1.7 to 1.9 degrees, 1.5 to 2.1 degrees, 1 to 4 degrees, or 0.5 to 10 degrees. Although in the embodiments of FIGS. 1A, 1B, 2A, and 2B the second tapered inner circumferential surface 48 is shown in cross section as flat, in other embodiments, the second tapered inner circumferential surface 48 is concave, convex, or has an arcuate configuration. In an alternative embodiment, the orientation of the second seal ring 40 is reversed such that the fifth axial face 42 abuts the second inner axial face 244. In an alternative embodiment, instead of the second tapered inner circumferential surface 48, there is a non-tapered surface (e.g., a cylindrical surface that is concentric with at least one of the fourth outer circumferential surface 46 and the third outer circumferential surface 36).

In still other embodiments, additional seal rings with the same or similar structure as the first and second seal rings 30, 40 are provided. For example, in some embodiments, one, two, three, four, five, six, or more additional seal rings are disposed between the first seal ring 30 and the second seal ring 40. In some embodiments, some or all of the additional seal rings have a tapered inner circumferential surface of the same taper angle and direction as the tapered inner circumferential surfaces 38, 48 of the first and second seal rings 30, 40. That is, in some embodiments, some or all of the tapered inner circumferential surfaces are parallel to each other. In other embodiments, some or all of the additional seal rings lack a tapered inner circumferential surface, and instead have a non-tapered inner circumferential surface. In some embodiments, the additional seal rings are made of carbon graphite.

FIGS. 4A-5D illustrate assembly of the cartridge seal assembly 1 according to the embodiment of FIG. 2A. First, the outer housing 10, the inner housing 20, the first seal ring 30, and the second seal ring 40 are provided. Next, as shown in FIGS. 4A-4B, the first seal ring 30 and the second seal ring 40 are placed inside the inner housing 20 such that the first anti-rotation feature 37A or the fourth anti-rotation feature 37B engages the second anti-rotation feature 27 and the third anti-rotation feature 47A or the fifth anti-rotation feature 47B (not shown in FIGS. 4A-4B) engages the second anti-rotation feature 27. That is, the first tangential notch 37A or the third tangential notch 37B engages the tangential protuberance 27, and the second tangential notch 47A or the fourth tangential notch 47B (not shown in FIGS. 4A-4B) also engages the tangential protuberance 27. Next, the outer housing 10 is screwed onto the inner housing 20 to form the completed assembly as shown in FIGS. 5A-5D. That is, the first threads 127 engage the second threads 227 to form the completed assembly as shown in FIGS. 5A-5D.

In the same way, the cartridge seal assembly 1 can be disassembled by unscrewing the inner housing 20 from the outer housing 10. That is, the first threads 127 disengage from the second threads 227. Once the inner housing 20 has been removed, the first and second seal rings 30, 40 can be replaced. Then, the inner housing 20 can be screwed back onto the outer housing 10 without disturbing the placement of the outer housing 10.

Referring to FIGS. 6-7, in some embodiments, a shaft 2 is configured to rotate in the first passage 31, the first aperture 11, and the second aperture 21. In some embodiments, the shaft 2 is hollow and has a third axis A3. When the shaft 2 is at rest, the first seal ring 30 rests on the shaft 2 due to the force of gravity. When the turbine driving the shaft 2 starts and the shaft 2 begins to rotate, there is relatively high pressure on the side of the second outer axial face 242 and relatively low pressure on the side of the first outer axial face 142. This pressure differential causes a flow of gas from the high-pressure side to the low-pressure side. Gas flows in that a direction from the high pressure side to the low pressure side through the first passage 31. The force corresponding to the pressure differential symmetrically radially displaces the first seal ring 30 by exerting a radially outward force on the first tapered inner circumferential surface 38, thereby circumferentially aligning the first seal ring 30 with the third axis A3. The first seal ring 30 is configured to become coaxial with the shaft 2 (i.e., the first axis A1 aligns with the third axis A3), in response to the gas flowing across the first tapered inner circumferential surface 38. Without being bound by any theory, the taper angle of the first seal ring 30 and the first radially inner-most edge 33 are designed to create a pressure force to allow the first seal ring 30 to remain concentric with an outside diameter of the shaft 2 (e.g., an impeller). The first annular groove 39 helps reduce friction (e.g., drag) as the first seal ring 30 moves to maintain coaxial position in relation to the shaft 2. In some embodiments, the first seal ring 30 is configured such that there is a first gap G1 between a first inner-most edge 33 of the first seal ring 30 and the shaft 2, in response to the gas pressure differential across first passage 31. In some embodiments, the first gap G1 between the first inner-most edge 33 and the shaft 2 is the constant around the entire circumference of the shaft 2.

In those embodiments that include the second seal ring 40, the shaft 2 is configured to rotate inside the first passage 31, the second passage 41, the first aperture 11, and the second aperture 21. The second seal ring 40 behaves in substantially the same way as the first seal ring 30. When the shaft 2 is at rest, the second seal ring 40 rests on the shaft 2 due to the force of gravity. When the turbine driving the shaft 2 starts and the shaft 2 begins to rotate, there is relatively high pressure on the side of the second outer axial face 242 and relatively low pressure on the side of the first outer axial face 142. This pressure differential causes a flow of gas from the high-pressure side to the low-pressure side. Gas flows in a direction from the high pressure side to the low pressure side through the second passage 41 (and the first passage 31). The force corresponding to the pressure differential symmetrically radially displaces the second seal ring 40 by exerting a radially outward force on the second tapered inner circumferential surface 48, thereby circumferentially aligning the second seal ring 40 with the third axis A3. Like the first seal ring 30, the second seal ring 40 is configured to become coaxial with the shaft 2 (i.e., the second axis A2 aligns with the third axis A3), in response to the gas flowing across the second tapered inner circumferential surface 48. Without being bound by any theory, the taper angle of the second seal ring 40 and the second radially inner-most edge 43 are designed to create a pressure force to allow the second seal ring 40 to remain concentric with the outside diameter of the shaft 2 (e.g., an impeller). The second annular groove 49 helps reduce friction (e.g., drag) as the second seal 40 moves to maintain coaxial position in relation with the shaft 2. In some embodiments, the second seal ring 40 is configured such that there is a second gap G2 between a second inner-most edge 43 of the second seal ring 40 and the shaft 2, in response to the gas pressure differential across the second passage 41. In some embodiments, the second gap G2 between the second inner-most edge 43 and the shaft 2 is constant around the entire circumference of the shaft 2. In some embodiments, the first gap G1 is the same as the second gap G2.

As shown in FIG. 6, the cartridge seal assembly 1 is installed in a casing 3 of a microturbine, the outer housing 10 is press fit into a pocket 35 of the casing 3, the inner housing 20 is located on a high pressure side of the casing 3, and the first seal 30 and the second seal 40 taper inwardly away from the high pressure side. In some embodiments, the first tubular segment 12 is press fit into the pocket 35 of the casing 3 (e.g., a stationary turbine casing 3). That is, the first outer circumferential surface 126 is fixed by friction inside the pocket 35.

In some embodiments, the cartridge seal assembly 1 is used to seal a compressor impeller shaft (e.g., shaft 2). In some embodiments, the cartridge seal assembly 1 is staked into a compressor housing (e.g., stationary turbine casing 3). The cartridge seal assembly 1 according to an embodiment provides a compact seal by virtue of the first seal ring 30 and the second seal ring 40 being self-centering with respect to the shaft 2 and enclosed in the inner housing 20 and the outer housing 10, which are rigid. The first seal ring 30 and the second seal ring 40 are stationary (i.e., they do not rotate) and effectively seal the shaft 2 of the rotating impeller. The anti-rotation features 27, 37A, 37B, 47A, 47B are advantageous in that they do not require interaction with or modification to the turbine housing (e.g., stationary turbine casing 3). The anti-rotation features 27, 37A, 37B, 47A, 47B avoid the need to use press fit pins. The cartridge seal assembly 1 is constructed so that it can be opened to replace the sealing elements (i.e., the seal rings 30, 40) without removing the press fit component (i.e., the outer housing 10). This allows replacement of the seal rings 30, 40 without removal of the outer housing 10 from the pocket 35 of the stationary turbine casing 3.

The cartridge seal assembly 1 according to the present disclosure provides leakage control through a controlled clearance over a rotating, high-speed compressor or turbine shaft (e.g., shaft 2). The seal rings 30, 40 are both self-centering and non-contacting, i.e., the seal rings 30, 40 do not contact the shaft 2 when the shaft 2 is rotating. This non-contact configuration enables the seal rings 30, 40 to have a much longer service life than conventional contacting seals. Materials of the seal rings 30, 40, the taper angles, and the first and second inner-most edges 33, 43 can be altered to accommodate different pressure, temperature, and process fluid.

The cartridge seal assembly 1 according to the present disclosure is suitable to seal stages of a turbine gas compressor and may be used in a wide range of operating environments. It has broad applicability in emerging electric or hybrid aircraft technology.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A cartridge seal assembly 1 for a shaft 2, comprising:
an outer housing 10 comprising a first tubular segment 12 having a first axial end 122 and a second axial end 124, and a first flange 14 extending radially inward from the second axial end 124;
an inner housing 20 comprising a second tubular segment 22 having a third axial end 222 and a fourth axial end 224, and a second flange 24 extending radially inward from the fourth axial end 224, the inner housing 20 being removably secured to the outer housing 10; and
a first seal ring 30 having a first tapered inner circumferential surface 38 that defines a first passage 31 therethrough, the first seal ring 30 engaging a portion of one of the inner housing 20 and the outer housing 10.

2. The cartridge seal assembly 1 of claim 1, wherein the shaft 2 is configured to rotate in the first passage 31.

3. The cartridge seal assembly 1 of claim 1 or claim 2, wherein the first seal ring 30 is configured to become coaxial with the shaft 2, in response to gas flowing across the first tapered inner circumferential surface 38.

4. The cartridge seal assembly 1 of any one of claims 1 to 3, further comprising a second seal ring 40 having a second tapered circumferential surface 48, the second seal ring 40 engaging the inner housing 20.

5. The cartridge seal assembly 1 of any one of claims 1 to 4, wherein the first seal ring 30 further comprises a first anti-rotation feature 37A, the inner housing 20 further comprises a second anti-rotation feature 27, and the second anti-rotation feature 27 engages the first anti-rotation feature 37A to prevent rotation of the first seal ring 30 with respect to the inner housing 20.

6. The cartridge seal assembly 1 of claim 5, wherein:
the first anti-rotation feature 37A comprises a first tangential notch 37A and the second anti-rotation feature 27 comprises a tangential protuberance 27, and a third tangential notch 37B is formed 180 degrees apart from the first tangential notch 37A on the first seal ring 30, or
the second seal ring 40 further comprises a third anti-rotation feature 47A, and the second anti-rotation feature 27 engages the third anti-rotation feature 47A to prevent rotation of the second seal ring 40 with respect to the inner housing 20, the third anti-rotation feature 47A comprises a second tangential notch 47A, and a fourth tangential notch 47B is formed 180 degrees apart from the second tangential notch 47A on the second seal ring 40.

7. The cartridge seal assembly 1 of any one of claims 1 to 6, wherein
the first tubular segment 12 has a first inner circumferential surface 128 and a first outer circumferential surface 126,
the first flange 14 comprises a second inner circumferential surface 146,
first threads 127 are formed on the first inner circumferential surface 128 and extend axially from the first axial end 122,
the second tubular segment 22 has a third inner circumferential surface 228 and a second outer circumferential surface 226,
the second flange 24 comprises a fourth inner circumferential surface 246,
second threads 227 are formed on the second outer circumferential surface 226 and extend axially from the fourth axial end 224, and
the first threads 127 engage the second threads 227 to removably secure the inner housing 20 to the outer housing 10.

8. The cartridge seal assembly 1 of any one of claims 1 to 7, wherein:
the first tubular segment 12 comprises a first axial face 129 proximate the first axial end 122,
the first flange 14 comprises a first outer axial face 142 and a first inner axial face 144,
the second tubular segment 22 comprises a second axial face 229 proximate the third axial end 222,
the second axial face 229 abuts the first inner axial face 144,
the second flange 24 comprises a second inner axial face 244 and a second outer axial face 242, and
the first seal ring 30 is disposed between the first inner axial face 144 and the second inner axial face 244.

9. The cartridge seal assembly 1 of any one of claims 1 to 10, wherein:
the first seal ring 30 further comprises a third axial face 32, a fourth axial face 34, and a third outer circumferential surface 36,
the first tapered inner circumferential surface 38 extends from the third axial face 32 to the fourth axial face 34, and
an inner diameter of the first seal ring 30 defined by the first tapered inner circumferential surface 38 reduces moving from the fourth axial face 34 to the third axial face 32.

10. The cartridge seal assembly 1 of any one of claims 4 to 10, when dependent on claim 4, wherein:
the second seal ring 40 further comprises a fifth axial face 42, a sixth axial face 44, and a fourth outer circumferential surface 46,
the second tapered inner circumferential surface 48 extends from the fifth axial face 42 to the sixth axial face 44, and
an inner diameter of the second seal ring 40 defined by the second tapered inner circumferential surface 48 reduces moving from the sixth axial face 44 to the fifth axial face 42.

11. The cartridge seal assembly 1 of claim 10, wherein:
the fourth axial face 34 abuts the fifth axial face 42, or
the first seal ring 30 further comprises a first annular groove 39 formed between the third outer circumferential surface 36 and the third axial face 32, the second seal ring 40 further comprises a second annular groove 49 formed between the fourth outer circumferential surface 46 and the fifth axial face 42.

12. The cartridge seal assembly 1 of any one of claims 1 to 10, wherein the outer housing 10 is snap-fit onto the inner housing 20, and/or wherein the first tubular segment 12 is press fit into a pocket 35 of a turbine casing 3.

13. The cartridge seal assembly 1 of any one of claims 1 to 11, wherein a taper angle of the first tapered inner circumferential surface 38 with respect to a first axis A1 of the first seal ring 30 is within a range of 0.5 to 10 degrees.

14. The cartridge seal assembly 1 of any one of claims claim 4 to 13, when dependent from claim 4, wherein:
the first seal ring 30 is configured such that there is a first gap G1 between a first inner-most edge 33 of the first seal ring 30 and the shaft 2, in response to a gas pressure differential across the first passage 31, and wherein the second seal ring 40 is configured such that there is a second gap G2 between a second inner-most edge 43 of the second seal ring 40 and the shaft 2, in response to a gas pressure differential across a second passage 41 through the second seal ring 40; and/or
the shaft 2 is configured to rotate inside a second passage 41 through the second seal ring 40 and the first passage 31.

15. The cartridge seal assembly 1 of any one of claims 1 to 14, wherein:
the outer housing 10 defines a first interior space;
the second flange 24 extends into the first interior space;
the first passage 31 is a first free end passage disposed proximate to a first radially innermost portion of the first seal ring 30; and/or
the first tapered inner circumferential surface 38 extends radially inwardly from the outer housing 10 and the inner housing 20.
